# EUROPEAN PATENT APPLICATION

(11) **EP 4 797 103 A1**
(43) Date of publication of application: **26.08.2026**
(21) Application number: 25212466.4
(22) Date of filing: 30.10.2025
(51) Int. Cl.: G06F 11/3668, G06F 11/3698, G06N 20/00, G06N 3/02

(54) **MULTI-AGENT LARGE MULTIMODAL MODEL (LMM) SYSTEM AND METHOD FOR GENERATING TEST CASES**

(30) Priority: 20.02.2025 US 202519059155
(71) Applicant: MEDIATEK INC., Hsinchu City 30078 (TW)
(72) Inventor: HUANG, Min-Shan, Hsinchu City (TW); LIN, Yu-Hsuan, Hsinchu City (TW); GUO, Huiping, Hefei Anhui (CN); WANG, Chia-Chun, Hsinchu City (TW); LAI, Chin-Tang, Hsinchu City (TW); YEH, Chia-Shun, Hsinchu City (TW)
(74) Representative: Hoefer & Partner Patentanwälte mbB

(57) **Abstract**

A system including multiple artificial intelligence, AI, agents generates test cases for a test target in multiple stages. A first AI agent uses a large multimodal model, LMM, to process a first prompt and specifications of the test target to generate respective identifiers of test plans (1110). A second AI agent uses the LMM to process a second prompt, the specifications of the test target, and an output of the first AI agent to generate an ordered list of test steps in each test plan (1120). A third AI agent uses the LMM to process a third prompt and an output of the second AI agent to expand the test plans into test cases (1130). The system verifies the output of each of the first AI agent, the second AI agent, and the third AI agent (1140), and generates a test case document according to the test cases (1150).

## Description

### TECHNICAL FIELD

Embodiments of the invention relate to techniques based on large multimodal models (LMMs) for automatically generating test cases for a test target.

### BACKGROUND OF THE INVENTION

The integrity of a test case suite is a crucial factor in maintaining hardware and software product quality. In the past, most test cases were manually written by engineers to ensure that their products comply with the specifications. However, this manual process was extremely labor-intensive. Manually writing each test case involves reading extensive documentation and relying on past test cases that met verification objectives.

Thus, there is a need for developing cost-efficient methods for test generation.

### SUMMARY OF THE INVENTION

A computer-implemented method and a system according to the invention are defined in the independent claims. The dependent claims define preferred embodiments thereof. In one embodiment, a computer-implemented method is provided for generating test cases for a test target in multiple stages. The method includes the steps of: processing, by a first AI agent using a large multimodal model (LMM), a first prompt and specifications of the test target to generate respective identifiers of test plans; processing, by a second AI agent using the LMM, a second prompt, the specifications of the test target, and an output of the first AI agent, to generate an ordered list of test steps in each test plan; processing, by a third AI agent using the LMM, a third prompt and an output of the second AI agent to expand the test plans into test cases. Each test case includes at least the identifiers, the test steps, and additional test attributes. The method further includes the steps of verifying the output of each of the first AI agent, the second AI agent, and the third AI agent; and generating a test case document according to the test case.

In another embodiment, a system is provided for generating test cases for a test target in multiple stages. The system includes processors and memory to store AI agents. One or more of the processors are operative to perform the aforementioned method for generating the test cases.

Other aspects and features will become apparent to those ordinarily skilled in the art upon review of the following description of specific embodiments in conjunction with the accompanying figures.

### BRIEF DESCRIPTION OF DRAWINGS

The present invention is illustrated by way of example, and not by way of limitation, in the figures of the accompanying drawings in which like references indicate similar elements. It should be noted that different references to "an" or "one" embodiment in this disclosure are not necessarily to the same embodiment, and such references mean at least one. Further, when a particular feature, structure, or characteristic is described in connection with an embodiment, it is submitted that it is within the knowledge of one skilled in the art to effect such feature, structure, or characteristic in connection with other embodiments whether or not explicitly described.
FIG. 1 is a diagram illustrating an example of an LMM-based multi-agent system according to one embodiment.
FIG. 2 is a block diagram illustrating further details of a test point agent according to one embodiment.
FIG. 3 is a block diagram illustrating further details of a test plan agent according to one embodiment.
FIG. 4 is a block diagram illustrating an example of a relevancy calculator module according to one embodiment.
FIG. 5 is a block diagram illustrating further details of a test case agent according to one embodiment.
FIG. 6 is a block diagram illustrating an example of an intervention module according to one embodiment.
FIG. 7 is a block diagram illustrating an example of a system operative to perform automatic test generation according to one embodiment.
FIG. 8 is a flow diagram illustrating a method for test point generation according to one embodiment.
FIG. 9 is a flow diagram illustrating a method for test plan generation according to one embodiment.
FIG. 10 is a flow diagram illustrating a method for test case generation according to one embodiment.
FIG. 11 is a flow diagram illustrating a method for automatic test generation according to one embodiment.

### DETAILED DESCRIPTION OF THE INVENTION

In the following description, numerous specific details are set forth. However, it is understood that embodiments of the invention may be practiced without these specific details. In other instances, well-known circuits, structures, and techniques have not been shown in detail in order not to obscure the understanding of this description. It will be appreciated, however, by one skilled in the art, that the invention may be practiced without such specific details. Those of ordinary skill in the art, with the included descriptions, will be able to implement appropriate functionality without undue experimentation.

The disclosure herein describes a multi-stage automatic test generation system and method using artificial intelligence (AI) agents that are based on a large multimodal model (LMM). An LMM is an AI model capable of processing information from multiple data types or modalities, such as text, images, audio, and/or video. The test generation system can automatically read a large number of files to generate test cases for a test target. A non-limiting example of a test target is a Universal Serial Bus (USB) module, which encompasses hardware and software. The test generation system can also be guided by domain knowledge, such as past experiences and experts' knowledge, when generating the test cases. The test generation system includes three stages, with each stage having a dedicated AI agent specialized to handle the test generation process in that stage. Having a dedicated and specialized AI agent focus on a specific task can increase accuracy of the resulting test cases. In the following description, the AI agents of the three stages are also referred to as the test agents.

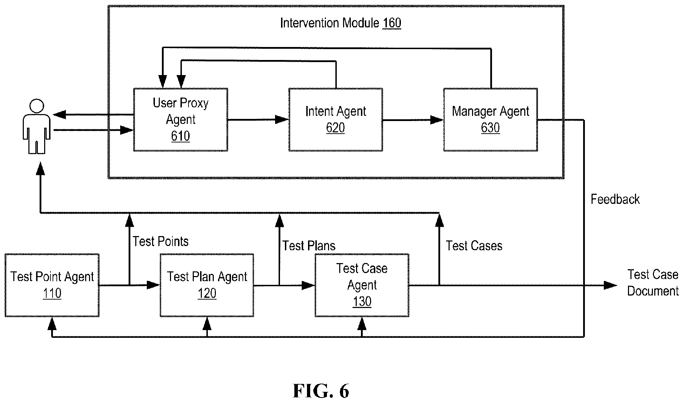

At the end of each stage, there is an option for human intervention with the test agent of that stage. Preferably, the test generation system includes an intervention module using AI modules to interact with a user and the test agents. When the user identifies a problem in the output of a test agent, the intervention module interacts with the user in an iterative process to obtain from the user a description of the problem with sufficient information. The intervention module then sends feedback to the test agent for correction of the output such that the output is correct and complete. More details about the intervention module will be provided later with reference to FIG. 6.

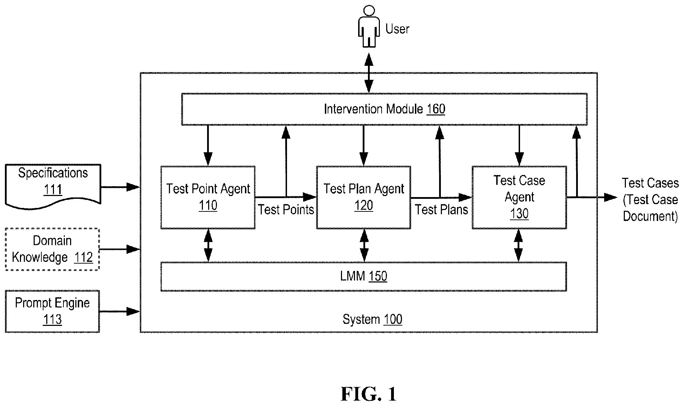

FIG. 1 is a diagram illustrating an example of an LMM-based multi-agent system 100 according to one embodiment. The system 100 includes three stages for generating tests for a test target. Each stage is handled by a corresponding test agent, where the test agents include a test point agent 110, a test plan agent 120, and a test case agent 130. Each agent is specialized for the corresponding stage by utilizing trained AI models, including one or more generative AI models such as an LMM 150 to process and respond to natural language prompts, image inputs, and other types of inputs. A prompt engine 113 includes memory to store instructions (a.k.a. prompts) for prompting each test agent. Inputs to the system 100 include the prompts and documents, such as specifications 111, guidelines, and industry standards for testing the test target. The documents may include public documents and proprietary documents. FIG. 1 shows the specifications 111 as a non-limiting example. Preferably, inputs to the system 100 may also include domain knowledge 112, e.g., examples of principles and/or insights obtained from testing a prior version of the test target, specific sections or relevant aspects of the specifications 111, examples and/or definitions of the requested output, etc. The use of the domain knowledge 112 can improve the accuracy of the output. However, the system 100 can process the specifications 111 when the domain knowledge 112 is absent from the inputs. Thus, the domain knowledge 112 is shown in FIG. 1 in dotted lines. The output of the system 100 is a set of test cases. Preferably, the system 100 outputs a test case document including multiple fields. The fields for each test case contain the attributes of the test case, such as the identifier of the test case and information of how to configure and execute the test case.

Preferably, the test point agent 110 identifies what to test on the test target, and outputs a set of test points that identify the corresponding test plans. Each test point contains the identifier of the corresponding test plan. For example, the identifier of a test plan may include the title and the purpose of the test plan. A non-limiting example of the title is the name of a test plan, and the purpose may be to meet a given requirement in the specifications 111.

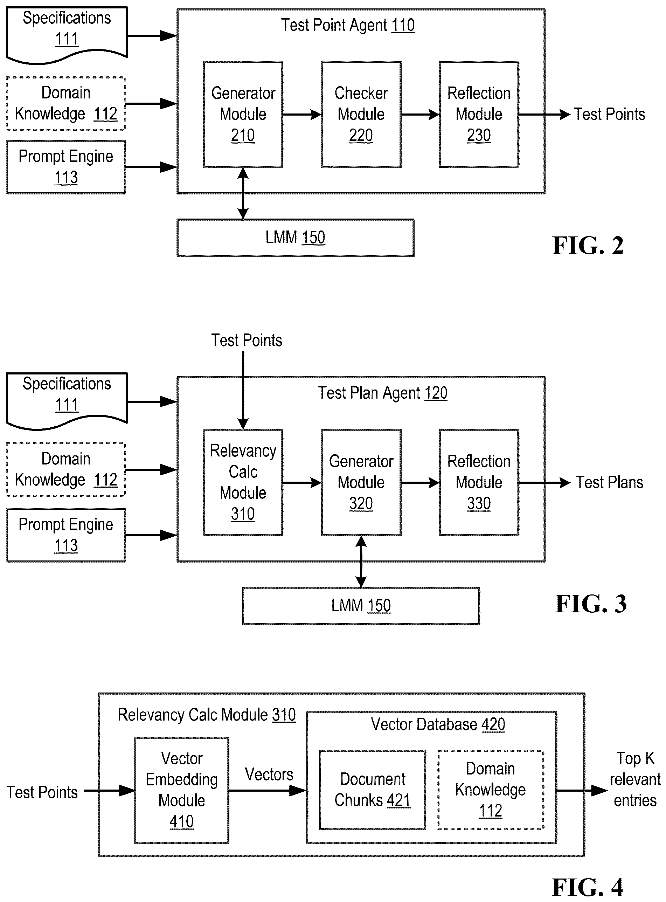

FIG. 2 is a block diagram illustrating further details of the test point agent 110 according to one embodiment. The test point agent 110 includes a generator module 210 to generate test points, a checker module 220 to determine whether any of the test points can be merged, and a reflection module 230 to identify conflicts in the test points. The generator module 210, the checker module 220, and/or the reflection module 230 may include or utilize one or more AI models to perform operations. Preferably, the generator module 210 may use the LMM 150 to process natural language and image inputs. The output of the test point agent 110 is a collection of test points. Preferably, a test point is a preliminary test plan that includes only the title (e.g., a name) and the purpose (e.g., to meet a given requirement) of the test plan.

Preferably, the prompt engine 113 generates a prompt to the test point agent 110. The prompt includes a roleplay instruction for the test point agent 110, instructions for the generator module 210, instructions for the checker module 220, and instructions for the reflection module 230. Given a test target denoted as {item}, a non-limiting example of these instructions may be as follows.

The roleplay instruction for the test point agent 110: "You are an expert responsible for defining test scenarios and validation methods to ensure that {item} functions and handles errors properly in real-world usage."

The instructions for the generator module 210: "Given the specifications describing the test generation process and details within the process, generate test plans for {item}. For each test plan, output its title and purpose. The output includes, for each test plan, (1) title: the name of the scenario or functionality under test, and (2) purpose: a specific description, including conditions, parameter settings, requirements, main action, expected status or result values."

The instructions for the checker module 220: "If there are two test plans with similar titles and purposes, merge them into one test plan and output the merged test plan. Output test plans with unique titles. Do not merge two test plans with different purposes into a test plan."

The instruction for the reflection module 230: "Please check if there are any technical conflicts in the test plan that makes it impossible to execute in the real-world." An example of a technical conflict in a test plan generated in the first stage is as follows.

For example, a technical conflict may be detected by the reflection module 230 from the purpose (e.g., test requirement) of a test plan. Suppose that the test requirement is to ensure that the multimedia rotate function operates correctly and does not interfere with the digital TV (DTV) auto tuning function. The test requirement further specifies that the TV should be able to rotate a playing video to a specified angle and return the video to the original orientation while the DTV auto tuning is in progress. The test involves videos with and without rotation metadata.

A technical conflict exists in the above test requirement because the multimedia rotation function and the DTV auto tuning function cannot concurrently be in operation. The reflection module 230 detects this conflict in the test plan and generates a corrected test requirement as follows: The test requirement is to verify that the multimedia rotation function is operational and performs correctly after the completion of the DTV auto tuning process. The test requirement includes the ability to initiate, pause, and resume video rotation from a USB storage device on a target device using a target software kit. The test covers rotation angles of 90, 180, and 270 degrees and ensures that the rotated media is displayed correctly without any error.

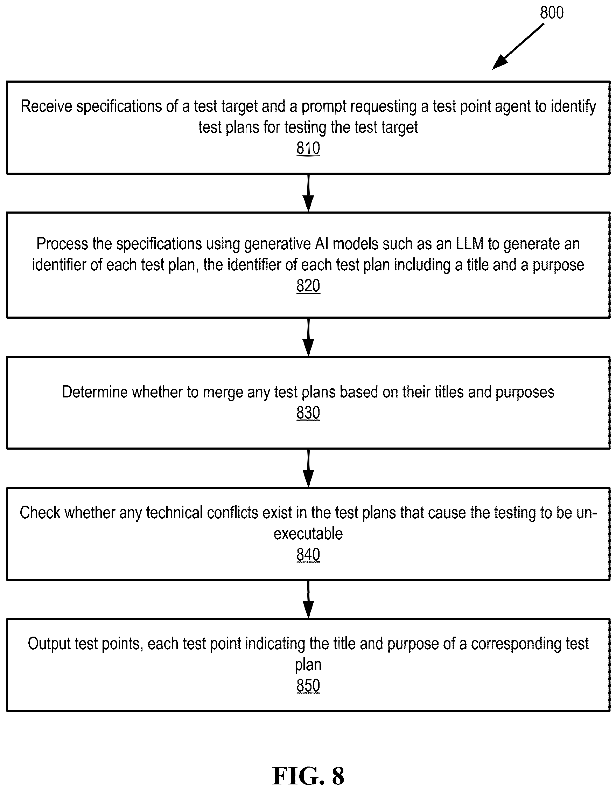

FIG. 8 is a flow diagram illustrating a method 800 for test point generation according to one embodiment. The test point generation is the first stage of the automatic test generation. Referring also to FIG. 2, the method 800 starts at step 810 when the test point agent 110 receives specifications 111 of a test target and a prompt requesting the test point agent 110 to identify test plans for testing the test target. Preferably, the test point agent 110 may also receive domain knowledge 112, such as user-provided information including principles, insights and specific sections of the specifications 111, software and hardware quality standards, etc. At step 820, the test point agent 110 processes the specifications 111 and the domain knowledge (when provided) using generative AI models such as the LMM 150 to generate an identifier of each of the test plans. The identifier of each test plan includes a title and a purpose. At step 830, the test point agent 110 determines whether to merge any test plans based on their titles and purposes. At step 840, the test point agent 110 checks whether any technical conflicts exist in the test plans that cause the testing to be un-executable. At step 850, the test point agent 110 outputs test points, each test point indicating the title and purpose of a corresponding test plan.

FIG. 3 is a block diagram illustrating further details of the test plan agent 120 according to one embodiment. Referring also to FIG. 1, the test plan agent 120 generates a test plan based on a corresponding test point. The test plan generated by the test plan agent 120 includes more details than the corresponding test point generated by the test point agent 120. The test plan agent 120 includes a relevancy calculator module 310 to calculate the top K entries in the specifications 111 and the domain knowledge 112 (when provided) that are most relevant to the test points, where K is a positive integer. The test plan agent 120 also includes a generator module 320 to generate test plans. Preferably, the generator module 320 generates, for each test plan, a test scenario including an ordered list of test steps describing the configuration and execution of the test plan. Each test scenario may include assertions, items, and/or operations. The generator module 320 also generates the test equipment needed for each test plan. The test plan agent 120 further includes a reflection module 330 to identify conflicts in the test plans. The relevancy calculator module 310, the generator module 320, and/or the reflection module 330 may include or utilize one or more AI models to perform operations. Preferably, the generator module 320 may use the LMM 150 to process natural language and image inputs. The output of the test plan agent 120 is a collection of test plans. Preferably, the test plan generated by the test plan agent 120 includes a title, a purpose, test equipment, and a test scenario.

FIG. 4 is a block diagram illustrating an example of the relevancy calculator module 310 according to one embodiment. The relevancy calculator module 310 includes a vector embedding module 410 to convert each test point into a test point vector. The relevancy calculator module 310 maintains a vector database 420 that stores vector representations of the documents (e.g., specific aspects/portions of the specifications 111) and the domain knowledge 112. The domain knowledge 112 may include test plan examples provided by the users/engineers. The relevancy calculator module 310 compares the test point vector with the stored vector representations, and identifies K entries (i.e., K vectors) in the vector database 420 that are most similar to the test point vector according to a similarity metric. As an example, the similarity may be measured by a distance between the vectors or by another metric. These K entries, also referred to as the top K relevant entries, are provided to the generator module 320 for generating test plans.

Preferably, the prompt engine 113 generates a prompt to the test plan agent 120. The prompt includes a roleplay instruction for the test plan agent 120, instructions for the relevancy calculator module 310, instructions for the generator module 320, and instructions for the reflection module 330. A non-limiting example of these instructions may be as follows.

The roleplay instruction for the test plan agent 120: "You are an expert hardware/software engineer specializing in test planning to assist in verifying hardware/software design specifications and ensuring quality."

The instructions for the generator module 320: "Please generate a test plan about {item}, whose title is {title}, and its purpose is {purpose}. A test plan includes: title, purpose, equipment, scenario step by step. The output includes (1) title: the test plan name, which is the same as the title of the corresponding test point, (2) purpose: the purpose of the test plan, which is the same as the purpose of the corresponding test point, (3) equipment: an ordered list of equipment that the test plan uses, and (4) scenario: an ordered list of test steps outlining the configuration and execution (with its software-controllable parameters) of the test plan.

The instruction for the reflection module 330: "Please check if there are any technical conflicts in the test plan that makes it impossible to execute in the real-world." An example of a technical conflict in a test plan generated in the second stage is as follows.

For example, a technical conflict may be detected by the reflection module 330 from the following scenario (e.g., test steps) of a test plan. (1) Power on the TV system. (2) Insert the USB storage device containing the video files into the TV. (3) Navigate to the TV menu and initiate DTV auto tuning. (4) Play the video file that does not contain rotate information. (4a) While the video is playing, activate the multimedia rotate function to rotate the video to 90 degrees. (4b) Verify that the video rotates accordingly while the DTV auto tuning is still in progress. (4c) Cancel the multimedia rotate function to set the video back to 0 degrees. (4d) Confirm that the video returns to its original orientation without any disruptions. (5) Repeat the above steps (4a - 4d) with the video file that contains rotate information. (6) Ensure that the DTV auto tuning completes successfully without any errors or disruptions. (7) Document the results for each step, noting any issues encountered during the test.

A technical conflict exists in the above test steps because multimedia rotation and video playback cannot operate during DTV auto tuning. The reflection module 230 detects this conflict (e.g., steps 4a and 4b) in the test plan and generates corrected test steps as follows. (1) Ensure DTV auto tuning is not active. (2) Plug USB storage into a TV. (3) Play video without rotate information. (a) Video format: compatible with TV. (b) Resolution: up to 4K (not 8K). (c) Rotate metadata: absent. (4) Initiate video rotation to [90/180/270] degrees. (4a) Rotation setting: 90, 180, 270 degrees. (5) Verify video rotates correctly. (6) Return video to original orientation. (6a) Rotation setting: 0 degrees. (7) Repeat steps 3-6 for video with rotate metadata. (7a) Rotate metadata: present. (8) Initiate DTV auto tuning (separate from video playback). (9) Verify that DTV auto tuning completes successfully. (10) Ensure no video playback or rotation during DTV auto tuning. (11) Validate system stability and absence of interference.

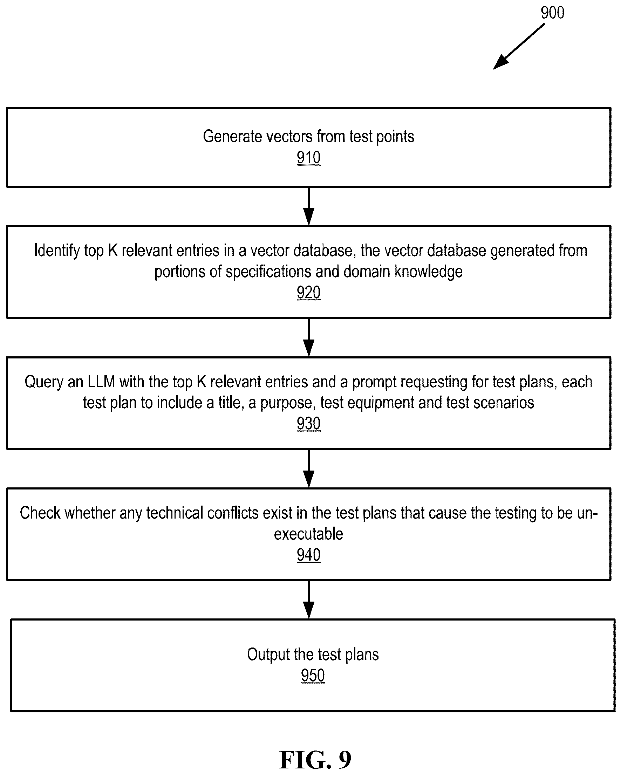

FIG. 9 is a flow diagram illustrating a method 900 for test plan generation according to one embodiment. The test plan generation is the second stage of the automatic test generation. Referring also to FIG. 3, the test plan agent 120 receives the test points generated by the test point agent 110, as well as documents such as the specifications 111, guidelines, standards, etc. Preferably, the test plan agent 120 also receives the domain knowledge 112, such as training examples and specific aspects of the specifications 111. The method 900 starts at step 910 when the test plan agent 120 generates vectors from test points. At step 920, the test plan agent 120 identifies top K relevant entries in the vector database 420, the vector database 420 generated from portions of specifications and domain knowledge. At step 930, the test plan agent 120 queries the LMM 150 with the top K relevant entries and a prompt requesting for test plans, each test plan to include a title, a purpose, test equipment and test scenarios. At step 940, the test plan agent 120 checks whether any technical conflicts exist in the test plans that cause the testing to be un-executable. At step 950, the test plan agent 120 outputs the test plans.

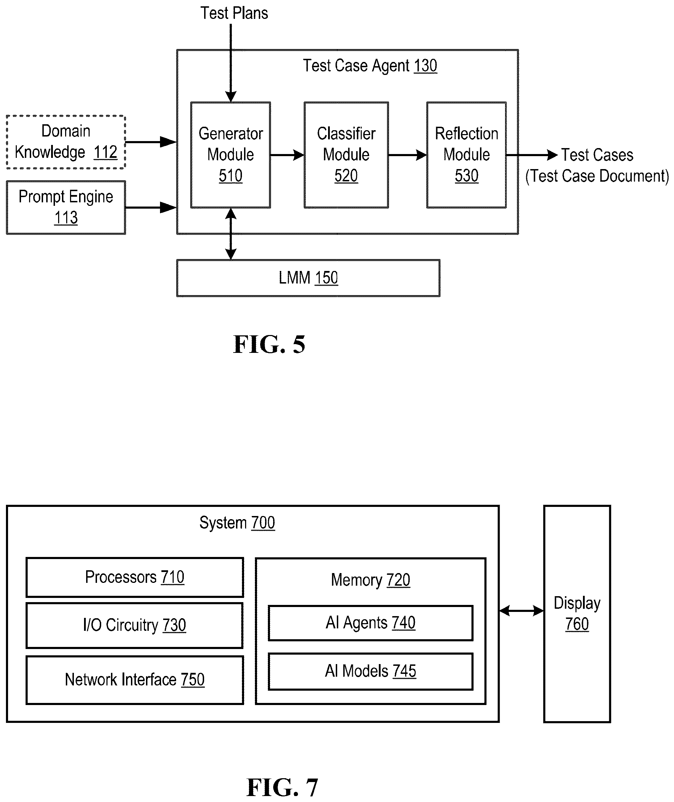

FIG. 5 is a block diagram illustrating further details of the test case agent 130 according to one embodiment. The test case agent 130 generates a test case based on a corresponding test plan. The test case agent 120 includes a generator module 510, a classifier module 520, and a reflection module 530. The generator module 510 determines the pass/fail criteria for each test case and generates a test procedure, which expands the test steps described in the test scenario of the corresponding test plan. The classifier module 520 classifies, for each test case, a number of test attributes including the quality attribute, the test technique, the test suite type, the test type, etc. The generator module 510, the classifier module 520, and/or the reflection module 530 may include or utilize one or more AI models to perform operations. Preferably, the generator module 510 may use the LMM 150 to process natural language and image inputs. The output of the test case agent 120 is a collection of test cases. Each test case not only identifies what to test, but also describes the details on how to perform the test.

Preferably, the prompt engine 113 generates a prompt to the test case agent 130. The prompt includes a roleplay instruction for the test case agent 130, instructions for the generator module 510, instructions for the classifier module 520, and instructions for the reflection module 530. A non-limiting example of these instructions may be as follows.

The roleplay instruction for the test case agent 130: "You are an expert test case designer responsible for crafting test cases based on the provided test plans."

The instructions for the generator module 510: "Please generate one test case (TC) of {item} for a test plan: {tp_title}, whose purpose and scenario are: {tp_details}. The output includes: (1) title: same as the test plan title, (2) description: description of the test cases, which is the same as the test plan purpose, (3) criteria: a description of cases, settings, parameters that need to be evaluated and their pass and fail criteria, and (4) test procedure: consistent with the test plan scenario (step by step, with list and sub-list). (5) test equipment: same as the test equipment in the test plan.

The instructions for the classifier module 520: "Please find the closest match among the provided options for each attribute of a test plan regarding {item}. The test plan is {tp_title}, {tp_purpose}. The provided options are limited. Please select an answer from the limited options. The output includes: (1) Quality attribute: a single selection from the following options based on only the main focus of the test plan, where the provided options are: {list}. (2) Test technique: a single selection based on the test plan's quality attribute and from the given options, where the options are: {list}. (3) Test suite type: a single selection or multiple selections from the given options according to the test stages of the test plan, where the options are: {list}. (4) Test type: a single selection, targeting each aspect of the software and hardware development testing environment, where the options are: {list}."

The instruction for the reflection module 530: "Please check if there are any technical conflicts in the test case that makes it impossible to execute in the real-world."

An example of technical conflicts in a test case generated in the third stage is regarding the test techniques for software quality. ISO/IEC 25010 defines a software product quality model, which categorizes the product quality into nine characteristics and sub-characteristics. These characteristics and sub-characteristics are linked to respective test techniques. A test case may erroneously associate a test technique with a characteristic or a sub-characteristic, causing technical conflicts. For example, error handling test techniques should be associated with the characteristic of reliability (in the subcategory of fault tolerance), rather than the characteristic of functional suitability.

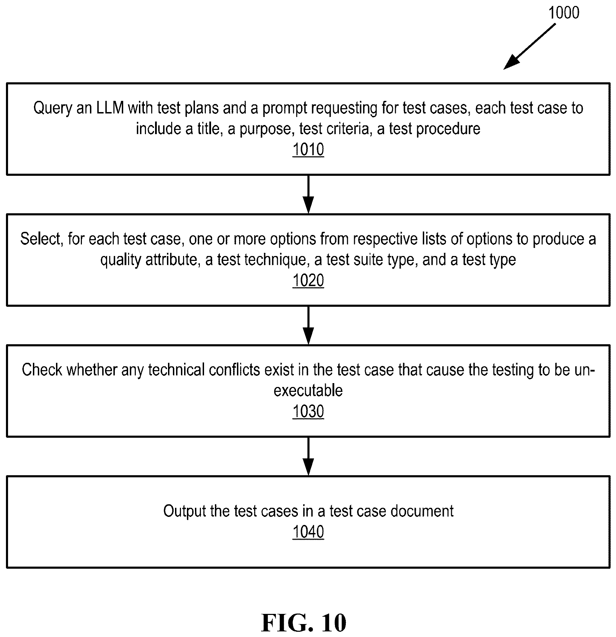

FIG. 10 is a flow diagram illustrating a method 1000 for test case generation according to one embodiment. The test case generation is the third stage of the automatic test generation. Referring also to FIG. 5, the test case agent 130 receives the test plans generated by the test plan agent 120. In some embodiment, the test case agent 130 may also receive the domain knowledge 112, such as one or more training examples, and definitions of the fields in the test case document to be generated by the test case agent 130. Referring also to FIG. 5, the method 1000 starts at step 1010 when the test case agent 130 queries the LMM 130 with test plans and a prompt requesting for test cases, each test case to include a title, a purpose, test criteria, a test procedure. At step 1020, the test case agent 130 selects, for each test case, one or more options from respective lists of options to produce a quality attribute, a test technique, a test suite type, and a test type. At step 1030, the test case agent 130 checks whether any technical conflicts exist in the test case that cause the testing to be un-executable. At step 1040, the test case agent 130 outputs the test cases. Preferably, the test case agent 130 may generate a test case document including the test cases. The test case document may contain multiple fields to store different attributes of each test case, such as a title, a purpose, test criteria, a test procedure, a quality attribute, a test technique, a test suite type, and a test type, etc. The test case document may be displayed on a screen. Preferably, the test case document may be inspected by AI agents in the intervention module 160 (FIG. 1) to verify the correctness and completeness of the test cases.

FIG. 6 is a block diagram of the intervention module 160 (FIG. 1) according to one embodiment. The intervention module 160 interacts with a user and the test agents (i.e., the test point agent 110, the test plan agent 120, and the test case agent 130) to ensure correctness and completeness in the output of each test agent. The intervention module 160 includes a user proxy agent 610, an intent agent 620, and a manager agent 630. Preferably, the user proxy agent 610 may receive a user's informal spoken description of any problems present in the output of any of the test agents. Non-limiting examples of the problems may include incorrect or incomplete test information, or inappropriate test scope. The intent agent 620 may, based on the description from the user through the user proxy agent 610, use an AI model to identify the user's intent and determine whether the information in the user's description is sufficient for a test agent (110, 120, or 130) to take action. If the semantics or information in the description is unclear, the intent agent 620 provides feedback to the user proxy agent 610 regarding the unclear portions of the description and requests the user to clarify. The request may be sent to the user through the user proxy agent 610. The interactions among the intent agent 620, the user proxy agent 610, and the user continues until the intent agent 620 determines that the user's description is sufficient for the appropriate test agent (110, 120, or 130) to resolve the problems indicated by the user. The intent agent 620 then forwards the user's description with the identified user intent to the manager agent 630. The manager agent 630 assesses whether the information provided by the user is sufficient. If not, the manager agent 630 provides feedback to the user proxy agent 610 to request further information.. Depending on which test stage's output has the detected problem, the manager agent 630 based on the identified user intent generates feedback to the responsible test agent (the test point agent 110, the test plan agent 120, or the test case agent 130) to correct the problem. This feedback contains all the required information collected by the manager agent 630 for the responsible test agent to make modifications in its output.

FIG. 7 illustrates an example of a system 700 operative to perform automatic test generation according to one embodiment. In this example, the system 700 includes multiple processors 710 such as a central processing unit (CPU), a graphics processing unit (GPU), a neural processing unit (NPU), a multimedia processor, a digital signal processor, and other general-purpose and/or special-purpose processing circuitry. The processors 710 may perform the operations of methods of FIG. 8 - FIG. 11. Preferably, the system 700 may perform the operations of the system 100 in FIG. 1.

The system 700 further includes a memory 720. The memory 720 may include one or more of a dynamic random-access memory (DRAM) device, a static RAM (SRAM) device, a flash memory device, and/or other volatile or non-volatile memory devices. Preferably, the memory 720 stores instructions executable by the processors 710 to perform automatic test generation. The memory 720 may store multiple AI agents 740 (e.g., the test point agent 110, the test plan agent 120, the test case agent 130, and AI agents in the intervention module 160 of FIG. 1 - FIG. 6). The memory 720 may further store AI models 745 for use by the AI agents 740. Although memory 720 is shown as one block in FIG. 7, it is understood that memory 720 may include multiple memory devices at multiple memory hierarchies.

The system 700 may further include I/O circuitry 730 to receive input and send output. Preferably, the system 700 may further include network interfaces 750 for accessing wired and/or wireless networks. Preferably, the system 700 may access external AI models, such as the LMM 150 (FIG. 1), via the network interfaces 750. It is understood that the LMM 150 may be located with the system 700 in alternative embodiments. Preferably, the system 700 may include or be coupled to a display 760 to display a test case document generated by the AI agents 740. It is understood that the system 700 is simplified for illustration; additional hardware and software components are not shown.

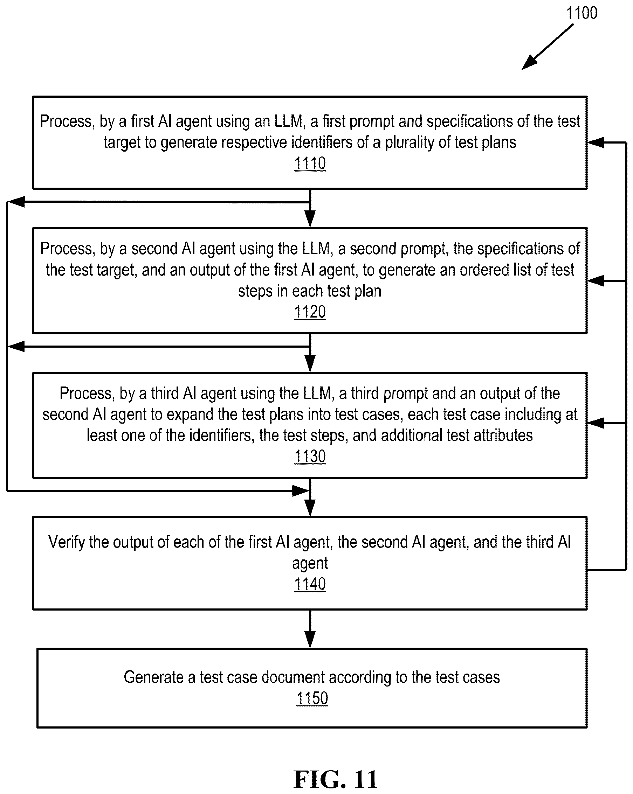

FIG. 11 is a flow diagram illustrating a computer-implemented method 1100 for automatic test generation according to one embodiment. The method 1100 may be performed by a system such as the system 700 in FIG. 7, or another computing system. Referring also to FIG. 1, the system includes a first AI agent, a second AI agent, and a third agent, such as the test point agent 110, the test plan agent 120, and the test case agent 130, respectively. Preferably, the method 1100 starts with step 1110 (test stage one) in which the first AI agent uses an LMM processes a first prompt and specifications of a test target to generate respective identifiers of each of a plurality of test plans. At step 1120 (test stage two), the second AI agent uses the LMM to process a second prompt, the specifications of the test target, and an output of the first AI agent to generate an ordered list of test steps in each test plan. At step 1130 (test stage third), the third AI agent uses the LMM to process a third prompt and an output of the second AI agent to expand the test plans into test cases, each test case including at least one of the identifiers, the test steps, and additional test attributes. At step 1140, the system verifies the output of each of the first AI agent, the second AI agent, and the third AI agent. Step 1140 may be performed immediately after each of the test stages one, two, and three, and the monitoring result of step 1140 may be sent to each of the test stages one, two, and three. At step 1150, the system generates a test case document according to the test cases.

Preferably, each identifier of a test plan includes a title and a purpose. Preferably, the first AI agent determines whether to merge two test plans based on respective titles and purposes. Preferably, the second AI agent embeds each identifier into a vector, identifies top K entries in a vector database that are most similar to the vector according to a similarity metric. The vector database is generated from portions of specifications and domain knowledge, and K is a positive integer. The second AI agent queries the LMM with the top K entries and the second prompt requesting generation of, at least in part, a test scenario for each test plan. Preferably, the third AI agent queries the LMM with the test plans and the third prompt to generate, at least in part, pass/fail test criteria for each test case.

Preferably, the first AI agent, the second AI agent, and the third AI agent are operative to detect conflicts in the identifiers, the test plans, and the test cases, respectively, before generating respective outputs.

Preferably, when generating the test case document, the system generates, for each test case, a plurality of fields in the test case document. The fields include the identifier and information of how to configure and execute the test case on the test target.

Preferably, when verifying the output of each of the first AI agent, the second AI agent, and the third AI agent, a user proxy AI agent may receive from a user a description of a problem in the output, an intent agent identifies an intent of the user from the description, and a manager AI agent generates feedback to one of the first AI agent, the second AI agent, and the third AI agent based on the description.

Preferably, one or more of the first prompt, the second prompt, and the third prompt include a roleplay instruction requesting a receiving AI agent to take on a requested role. Preferably, the test target includes hardware and software.

The operations of the flow diagrams of FIG. 8-11 have been described with reference to the exemplary embodiments of FIG. 1 and FIG. 7. However, it should be understood that the operations of the flow diagrams of FIG. 8-11 can be performed by embodiments of the invention other than the embodiments of FIG. 1 and FIG. 7, and the embodiments of FIG. 1 and FIG. 7 can perform operations different than those discussed with reference to the flow diagrams. It is understood that the order of operations shown in the flow diagrams of FIG. 8-11 is a non-limiting example. Alternative embodiments may perform the operations in a different order, combine certain operations, overlap certain operations, etc.

Various functional components or blocks have been described herein. As will be appreciated by persons skilled in the art, the functional blocks will preferably be implemented through circuits (either dedicated circuits or general-purpose circuits, which operate under the control of one or more processors and coded instructions), which will typically comprise transistors that are configured in such a way as to control the operation of the circuitry in accordance with the functions and operations described herein.

While the invention has been described in terms of several embodiments, those skilled in the art will recognize that the invention is not limited to the embodiments described, and can be practiced with modification and alteration within the scope of the appended claims. The description is thus to be regarded as illustrative instead of limiting.

## Claims

1. A computer-implemented method for generating test cases for a test target in multiple stages, comprising:
processing, by a first artificial intelligence, in the following also referred to as AI, agent using a large multimodal model, in the following also referred to as LMM, a first prompt and specifications of the test target to generate respective identifiers of a plurality of test plans (1110);
processing, by a second AI agent using the LMM, a second prompt, the specifications of the test target, and an output of the first AI agent, to generate an ordered list of test steps in each test plan (1120);
processing, by a third AI agent using the LMM, a third prompt and an output of the second AI agent to expand the test plans into test cases, each test case including at least one of the identifiers, the test steps, and additional test attributes (1130);
verifying the output of each of the first AI agent, the second AI agent, and the third AI agent (1140); and
generating a test case document according to the test cases (1150).

2. A system (700) for generating test cases for a test target in multiple stages, comprising:
a plurality of processors (710); and
memory (720) to store a plurality of artificial intelligence, in the following also referred to as AI, agents (740), wherein one or more of the processors (710) are operative to:
process, by a first AI agent using a large multimodal model, in the following also referred to as LMM, a first prompt and specifications of the test target to generate respective identifiers of a plurality of test plans;
process, by a second AI agent using the LMM, a second prompt, the specifications of the test target, and an output of the first AI agent, to generate an ordered list of test steps in each test plan;
process, by a third AI agent using the LMM, a third prompt and an output of the second AI agent to expand the test plans into test cases, each test case including at least one of the identifiers, the test steps, and additional test attributes;
verify the output of each of the first AI agent, the second AI agent, and the third AI agent; and
generate a test case document according to the test cases.

3. The computer-implemented method of claim 1 or the system (700) of claim 2, wherein each identifier includes a title and a purpose.

4. The computer-implemented method of claim 3, further comprising:
determining, by the first AI agent, whether to merge two test plans based on respective titles and purposes; or
the system (700) of claim 3, wherein the one or more processors (710) are further operative to:
determine, by the first AI agent, whether to merge two test plans based on respective titles and purposes.

5. The computer-implemented method of any one of claims 1, 3 and 4, further comprising:
embedding, by the second AI agent, each identifier into a vector,
identifying top K entries in a vector database that are most similar to the vector according to a similarity metric, wherein the vector database is generated from portions of specifications and domain knowledge, and K is a positive integer, and
querying the LMM with the top K entries and the second prompt requesting generation of, at least in part, a test scenario for each test plan; or
the system (700) of any one of claims 2 to 4, wherein the one or more processors (710) are further operative to:
embed each identifier into a vector; by the second AI agent,
identify top K entries in a vector database that are most similar to the vector according to a similarity metric, wherein the vector database is generated from portions of specifications and domain knowledge, and K is a positive integer, and
query the LMM with the top K entries and the second prompt requesting generation of, at least in part, a test scenario for each test plan.

6. The computer-implemented method of any one of claims 1 and 3 to 5, further comprising:
querying, by the third AI agent, the LMM with the test plans and the third prompt to generate, at least in part, pass/fail test criteria for each test case; or
the system (700) of any one of claims 2 to 5, wherein the one or more processors (710) are further operative to:
query, by the third AI agent, the LMM with the test plans and the third prompt to generate, at least in part, pass/fail test criteria for each test case.

7. The computer-implemented method of any one of claims 1 and 3 to 6, further comprising:
detecting, by the first AI agent, the second AI agent, and the third AI agent, conflicts in the identifiers, the test plans, and the test cases, respectively, before generating respective outputs; or
the system (700) of any one of claims 2 to 6, wherein the one or more processors (710) are further operative to:
detect, by the first AI agent, the second AI agent, and the third AI agent, conflicts in the identifiers, the test plans, and the test cases, respectively, before generating respective outputs.

8. The computer-implemented method of any one of claims 1 and 3 to 7, wherein generating the test case document further comprises:
generating, for each test case, a plurality of fields in the test case document, the fields including an identifier and information of how to configure and execute the test case on the test target: or
the system (700) of any one of claims 2 to 7, wherein the one or more processors (710) are further operative to:
generate, for each test case, a plurality of fields in the test case document, the fields including an identifier and information of how to configure and execute the test case on the test target.

9. The computer-implemented method of any one of claims 1 and 3 to 8, wherein verifying the output of each of the first AI agent, the second AI agent, and the third AI agent further comprises:
receiving, by a user proxy AI agent from a user, a description of a problem in the output,
identifying, by an intent AI agent, an intent of the user from the description, and
generating, by a manager AI agent, feedback to one of the first AI agent, the second AI agent, and the third AI agent based on the description; or
the system (700) of any one of claims 2 to 8, wherein, when verifying the output of each of the first AI agent, the second AI agent, and the third AI agent, the one or more processors (710) are further operative to:
receive, by a user proxy AI agent from a user, a description of a problem in the output,
identify, by an intent AI agent, an intent of the user from the description, and
generate, by a manager AI agent, feedback to one of the first AI agent, the second AI agent, and the third AI agent based on the description.

10. The computer-implemented method of any one of claims 1 and 3 to 9, or the system (700) of any one of claims 2 to 9, wherein one or more of the first prompt, the second prompt, and the third prompt include a roleplay instruction requesting a receiving AI agent to take on a requested role.

11. The computer-implemented method of any one of claims 1 and 3 to 10, or the system (700) of any one of claims 2 to 10, wherein the test target includes hardware and software.
